# EUROPEAN PATENT APPLICATION

(11) **EP 4 303 972 A2**
(43) Date of publication of application: **10.01.2024**
(21) Application number: 23173599.4
(22) Date of filing: 16.05.2023
(51) Int. Cl.: H01M 8/04007, H01M 8/04082, H01M 8/06

(54) **HYDROGEN POWERED FUEL CELL SYSTEM INCLUDING CONDENSER AND METHOD OF OPERATING THE SAME USING PRESSURE CONTROL**

(30) Priority: 17.05.2022 US 202263364846 P; 13.09.2022 US 202263375467 P
(71) Applicant: Bloom Energy Corporation, San Jose, CA 95134 (US)
(72) Inventor: KRISHNADASS, Jayakumar, San Jose, CA 95134 (US); WEINGAERTNER, David, San Jose, CA 95134 (US); HERCHEN, Harald, San Jose, CA 95134 (US); CHELDELIN, Brent, San Jose, CA 95134 (US)
(74) Representative: Wichmann, Hendrik

(57) **Abstract**

A method of operating a fuel cell power system includes providing a fresh hydrogen fuel to power modules that each contain a heater and a stack of fuel cells, providing a fuel exhaust containing hydrogen and water from the stack to a condenser, removing water from the fuel exhaust to generate a recycled fuel containing dewatered hydrogen, and pressurizing and recycling the recycled fuel output from the condenser to the power modules. The removed water may be vaporized in a stack cathode exhaust.

## Description

### FIELD

The present disclosure is related generally to a fuel cell system, and more specifically to a hydrogen power fuel cell system with a condenser for water knockout from fuel exhaust and pressure control operation.

### BACKGROUND

Fuel cells, such as solid oxide fuel cells, are electrochemical devices which can convert energy stored in fuels to electrical energy with high efficiencies. High temperature fuel cells include solid oxide and molten carbonate fuel cells. These fuel cells may operate using hydrogen and/or hydrocarbon fuels. There are classes of fuel cells, such as the solid oxide regenerative fuel cells, that also allow reversed operation, such that oxidized fuel can be reduced back to unoxidized fuel using electrical energy as an input.

### SUMMARY

According to various embodiments, a power system includes power modules that each comprise a heater and a stack of fuel cells that generate a fuel exhaust, a condenser configured to remove water from the fuel exhaust to generate recycled fuel, a recycling manifold configured to receive the fuel exhaust from the power modules and to transfer the fuel exhaust to the condenser, a recycle blower configured to pressurize the recycled fuel output from the condenser, and a fuel supply manifold configured to provide fresh fuel, or a mixture of the fresh fuel and the recycled fuel, to the power modules.

According to various embodiments, a method of operating a fuel cell power system includes providing a fresh hydrogen fuel to power modules that each contain a heater and a stack of fuel cells, providing a fuel exhaust containing hydrogen and water from the stack to a condenser, removing water from the fuel exhaust to generate a recycled fuel containing dewatered hydrogen, and pressurizing and recycling the recycled fuel output from the condenser to the power modules.

### BRIEF DESCRIPTION OF THE DRAWINGS

The accompanying drawings, which are incorporated herein and constitute part of this specification, illustrate example embodiments of the invention, and together with the general description given above and the detailed description given below, serve to explain the features of the invention.
FIG. 1 is a schematic of a fuel cell power module, according to various embodiments of the present disclosure.
FIG. 2A is a schematic view of a power system including power modules of FIG. 1, according to various embodiments of the present disclosure, and FIG. 2B is an enlarged schematic view showing fuel and fuel exhaust elements connected to a power module of FIG. 2A.
FIG. 2C is a schematic view showing fuel and exhaust elements that may alternatively be connected to a power module of FIG. 2A and that are configured for pressure control, according to various embodiments of the present disclosure.
FIG. 2D is a schematic view showing fuel supply and recycling module components that may alternatively be connected to a power module of FIG. 2A and that are configured for pressure control, according to various embodiments of the present disclosure.
FIG. 3 is a schematic view of a power system including power modules of FIG. 1, according to various embodiments of the present disclosure.
FIG. 4A is a schematic view of a power system including power modules of FIG. 1, according to various embodiments of the present disclosure.
FIG. 4B is a schematic view showing alternative fuel supply and recycling elements configured to for pressure control operation and that may be used in the system of FIG. 4A according to various embodiments of the present disclosure.
FIG. 5 is a simplified schematic view of additional components of the power system of FIG. 3, according to various embodiments of the present disclosure.
FIG. 6 is a simplified schematic view of additional components of the power system of FIG. 2A, according to various embodiments of the present disclosure.

### DETAILED DESCRIPTION

As set forth herein, various aspects of the disclosure are described with reference to the exemplary embodiments and/or the accompanying drawings in which exemplary embodiments of the invention are illustrated. This invention may, however, be embodied in many different forms and should not be construed as limited to the exemplary embodiments shown in the drawings or described herein. It will be appreciated that the various disclosed embodiments may involve particular features, elements or steps that are described in connection with that particular embodiment. It will also be appreciated that a particular feature, element or step, although described in relation to one particular embodiment, may be interchanged or combined with alternate embodiments in various non-illustrated combinations or permutations.

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

Ranges can be expressed herein as from "about" one particular value, and/or to "about" another particular value. When such a range is expressed, examples include from the one particular value and/or to the other particular value. Similarly, when values are expressed as approximations, by use of the antecedent "about" or "substantially" it will be understood that the particular value forms another aspect. In some embodiments, a value of "about X" may include values of +/- 1% X. It will be further understood that the endpoints of each of the ranges are significant both in relation to the other endpoint, and independently of the other endpoint.

Fuel cell systems, such as solid oxide fuel cell (SOFC) systems, may be operated using hydrogen or by reforming a hydrocarbon fuel, such as propane or natural gas, or may be operated using hydrogen gas. SOFC systems that operate using hydrogen gas may have a relatively simplified structure, since fuel reformation is not required, and may be operated at a very high efficiency, by recycling anode exhaust. In particular, hydrogen-fueled SOFC systems may have fuel utilization efficiencies of 95% or more.

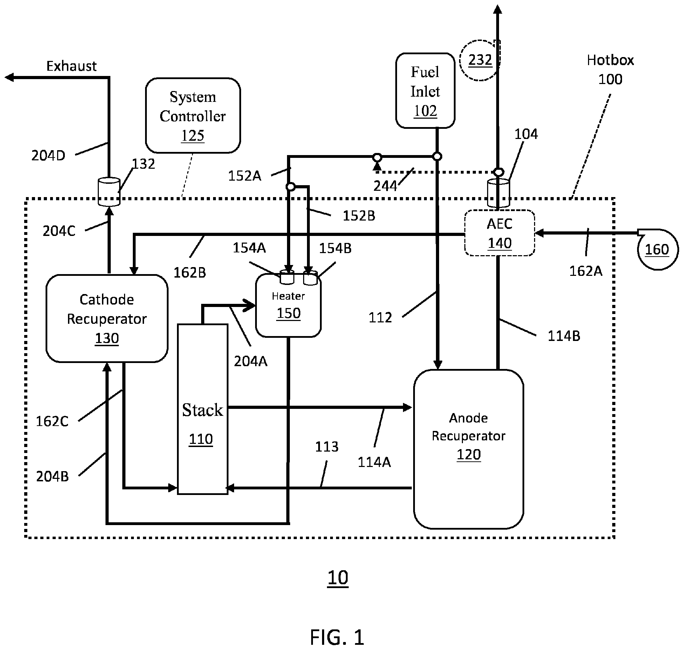

FIG. 1 is a schematic representation of a SOFC system power module 10 configured to operate using hydrogen gas (H₂), according to various embodiments of the present disclosure. Referring to FIG. 1, the power module 10 includes a hotbox 100 and various components disposed therein or adjacent thereto. The hot box 100 may contain stacks 110 of fuel cells, such as solid oxide fuel cells, separated by interconnects. Solid oxide fuel cells of the stack 110 may contain a ceramic electrolyte, such as yttria stabilized zirconia (YSZ), scandia stabilized zirconia (SSZ), scandia and ceria stabilized zirconia or scandia, yttria and ceria stabilized zirconia, an anode electrode, such as a nickel-YSZ, a nickel-SSZ or nickel-doped ceria cermet, and a cathode electrode, such as lanthanum strontium manganite (LSM). The interconnects may be metal alloy interconnects, such as chromium-iron alloy interconnects. The stacks 110 may be internally or externally manifolded for fuel.

The module 10 may also contain an anode recuperator 120 heat exchanger, a cathode recuperator 130 heat exchanger, and a startup heater 150. In some embodiments, the power module 10 may optionally include an anode exhaust cooler 140 and/or a recycle blower 232. The module 10 may also include a main air blower 160 (e.g., system blower), which may be disposed outside of the hotbox 100. However, the present disclosure is not limited to any particular location for each of the module components with respect to the hotbox 100.

The anode recuperator 120 receives fuel (e.g., H₂) from a fuel inlet 102 through a fuel inlet conduit 112. The fuel is heated in the anode recuperator 120 by fuel exhaust (e.g., anode exhaust) output from the stack 110, before being provided to the stack 110 by a stack fuel conduit 113. A first heater conduit 152A may fluidly connect the fuel inlet 102 to the startup heater 150. A second heater conduit 152B may also fluidly connect the fuel inlet 102 to the startup heater 150. Accordingly, the startup heater 150 may receive fuel provided by either or both of the first and second heater conduits 152A, 152B. The conduits 112, 152A and 152B may be fluidly connected to the fuel inlet 102 using any suitable fluid connectors. For example, the fuel inlet conduit 112 may be connected to the fuel inlet 102, the first heater conduit 152A may be connected to the fuel conduit 112 at a first two way splitter downstream of the fuel inlet 102, and the second heater conduit 152B may be connected to the first heater conduit 152B at a second two way splitter downstream of the first two way splitter as shown in FIG. 1. Alternatively, a single three way splitter may split fuel from the fuel inlet 102 into all three conduits 112, 152A and 152B. Other fluid connections may also be used to connect the fuel inlet 102 to the three conduits 112A, 152A and 152B. The first and second heater conduits 152A, 152B may be connected to the same or different fuel inlets of the startup heater 150. For example, the startup heater 150 may include a heating fuel inlet 154A and/or an ignition fuel inlet 154B connected to respective heater conduits 152A and 152B.

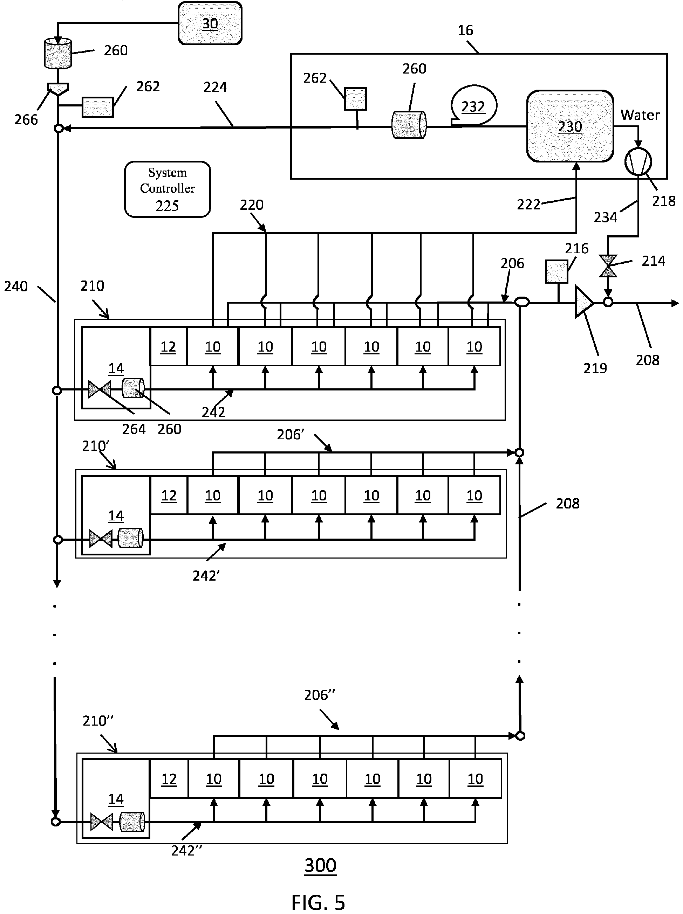

The startup heater 150 may also receive air exhaust (i.e., cathode exhaust) output from the stack 110 through an exhaust conduit 204A. The startup heater 150 may include a fuel oxidation catalyst (e.g., a noble metal catalyst) and/or heating element (e.g., resistive and/or radiative heating element). The heater 150 may generate heat by catalytically and/or thermally oxidizing received fuel using the air exhaust. Exhaust output from the startup heater 150 may be provided to the cathode recuperator 130 through exhaust conduit 204B. Exhaust output from the cathode recuperator 130 may be exhausted from the hotbox 100 through exhaust conduit 204C and exhaust outlet 132. An exhaust conduit 204D may be configured to receive exhaust output from the exhaust outlet 132. In some embodiments, the exhaust conduit 204D may be part of, or connected to, an exhaust manifold configured to receive exhaust output from multiple hotboxes 100, as discussed in detail below with respect to FIG. 5.

The main air blower 160 may be configured to provide air (e.g., an air inlet stream) to the anode exhaust cooler 140 through air conduit 162A. Air flows from the anode exhaust cooler 140 to the cathode recuperator 130 through air conduit 162B. The air is heated in the cathode recuperator 130 by the air exhaust output from the stack 110 (or by startup heater 150 exhaust output if the fuel is also provided to the startup heater 150, where the fuel is oxidized by the air exhaust to form the oxidized fuel heater exhaust output). The heated air flows from the cathode recuperator 130 to the stack 110 through air conduit 162C.

Fuel exhaust (e.g., an anode exhaust stream generated in the stack 110) is provided to the anode recuperator 120 through fuel exhaust conduit 114A. The fuel exhaust may contain unreacted hydrogen fuel and water. Fuel exhaust output from the anode recuperator 120 may be provided to a fuel exhaust outlet 104 of the hotbox 100, by fuel exhaust conduit 114B. In some embodiments, the optional anode exhaust cooler 140 may be configured to cool the fuel exhaust flowing through the fuel exhaust conduit 114B by the inlet air stream from the air conduit 162A, prior to the fuel exhaust reaching the fuel exhaust outlet 104. The power module 10 may also optionally include a purge conduit 244 that fluidly connects the first heater conduit 152A to the fuel exhaust conduit 114B.

The power module 10 may further comprise a system controller 125 configured to control various elements of the module 10. The controller 125 may include a central processing unit configured to execute stored instructions. For example, the controller 125 may be configured to control the air flow through the power module 10 and to open and close the fuel flow to the power module 10.

In some embodiments, the fuel cell stacks 110 may be arranged in the hotbox 100 around a central column including the anode recuperator 120, the startup heater 150, and the optional anode exhaust cooler 140. In particular, the anode recuperator 120 may be disposed radially inward of the startup heater 150, and the anode exhaust cooler 140 may be mounted over the anode recuperator 120 and the startup heater 150.

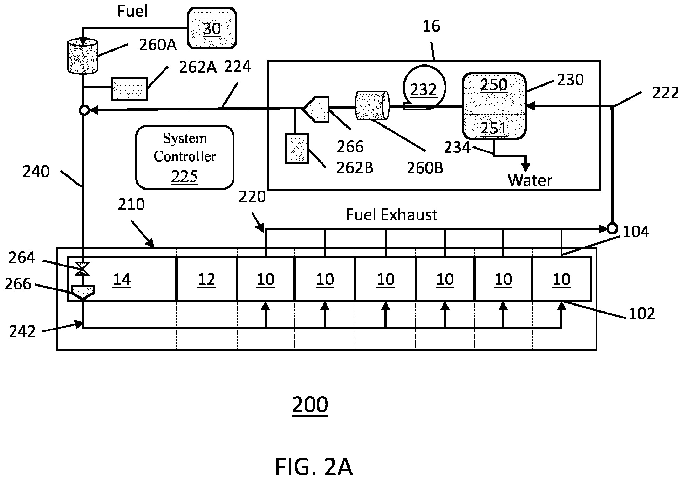

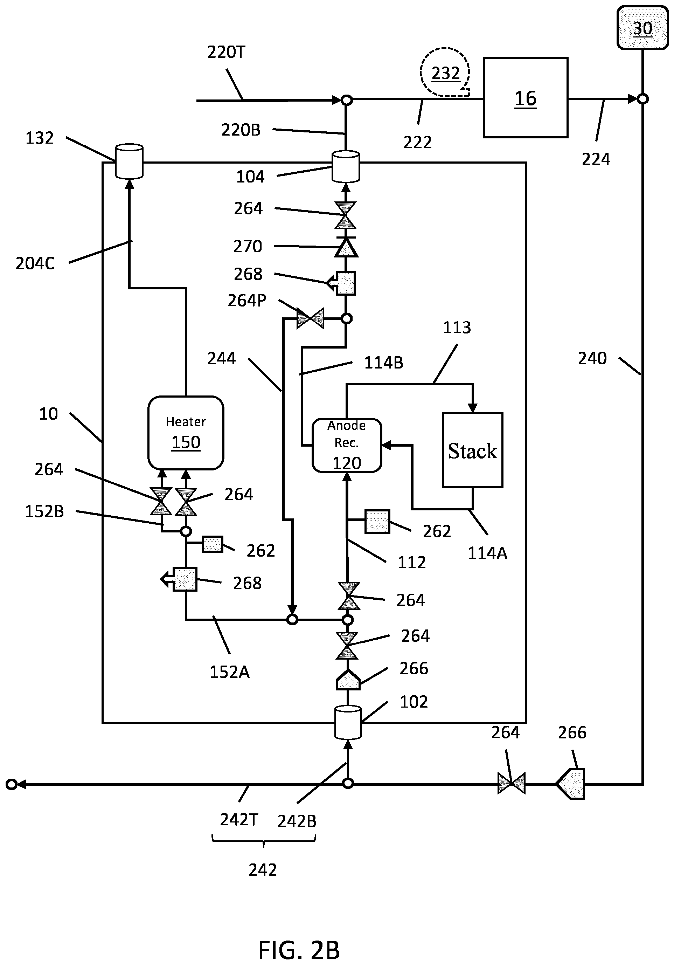

FIG. 2A is a simplified schematic view of a fuel cell power system 200 including power modules 10 of FIG. 1, according to various embodiments of the present disclosure. FIG. 2B is a schematic view showing fuel and fuel exhaust elements connected to a power module 10 of FIG. 2A.

Referring to FIGS. 1, 2A, and 2B, the power system 200 may include at least one module cabinet 210 that enclose the multiple power modules 10. For example, each power module 10 may be enclosed in a separate cabinet 210, such as a metal housing containing a door, as shown by the dashed vertical lines in FIG. 2A. The cabinets 210 may be arranged on a common base which contains fluid conduits and/or electrical wiring. Alternatively, a single cabinet 210 may enclose plural power modules 10. For example, as shown in FIG. 2A, the power modules 10 may be arranged in one or more rows in the cabinets 210. However, the present disclosure is not limited to any particular number of power modules 10 and/or cabinets 210.

The system 200 may also include one or more cabinets 210 (e.g., separate cabinets) for a power conditioning module 12 and an optional fuel processing module 14. The power conditioning module 12 may include components for converting the fuel cell generated DC power to AC power (e.g., DC/AC inverters and optionally DC/DC converters described in U.S. Patent Number 7,705,490, incorporated herein by reference in its entirety), electrical connectors for AC power output to the grid, circuits for managing electrical transients, a system controller (e.g., a computer or dedicated control logic device or circuit). The power conditioning module 12 may be designed to convert DC power from the fuel cell modules to different AC voltages and frequencies. Designs for 200V, 60Hz; 480V, 60Hz; 415V, 50Hz and other common voltages and frequencies may be provided.

The fuel processing module 14 may include fuel processing components, such as a filter and/or fuel (e.g., hydrogen) flow control and detection elements, such as flow meters, flow control valves 264, gas flow regulators (e.g., pressure regulators) 266, etc. In the alternative, the fuel processing module 14 may be omitted or utilized for other system components, such as a condenser. In various embodiments, the flow control valves 264 may be solenoid valves configured to open or close corresponding conduits.

The power system 200 may include a recycling manifold 220 (which may include one or more pipes and/or channels), a first recycling conduit 222, a second recycling conduit 224, a condenser 230, a recycle blower 232, a fuel supply conduit 240, and a fuel supply manifold 242 (e.g., one or more fuel supply conduits). The recycling manifold 220 may fluidly connect the fuel exhaust outlets 104 of each power module 10 to the first recycling conduit 222. The first recycling conduit 222 may be fluidly connect the recycling manifold 220 to an inlet of the condenser 230. The second recycling conduit 224 may fluidly connect an outlet of the condenser 230 to the fuel supply conduit 240. The condenser 230 may include a heat exchanger portion 250 and an optional water collection vessel 251 to collect condensed water. The heat exchanger 250 and the water collection vessel 251 may be located in the same housing or in separate housings fluidly connected in series. The water collection vessel 251 is fluidly connected to a water drain conduit 234.

The fuel supply manifold 242 may fluidly connect the fuel supply conduit 240 to the fuel inlets 102 of each power module 10. In one embodiment shown in FIG. 2B, the fuel supply manifold 242 may include a trunk conduit 242T that is fluidly connected to the fuel supply conduit 240, and branch conduits 242B that fluidly connect the fuel inlets 102 of each power module 10 to the trunk conduit 242T. The fuel inlet 102 may be fluidly connected to the anode recuperator 120 by the fuel inlet conduit 112. The fuel inlet 102 may be fluidly connected to the startup heater 150 by the first heater conduit 152A, and the second heater conduit 152B, either directly or indirectly via the fuel inlet conduit 112 for example.

The recycling manifold 220 and the first recycling conduit 222 may be configured to provide fuel exhaust output from the power modules 10 to the condenser 230. In particular, the recycling manifold 220 may include a trunk conduit 220T that is fluidly connected to the first recycling conduit 222, and branch conduits 220B that fluidly connect the trunk conduit 220T to the fuel exhaust outlet 104 of each power module 10. The condenser 230 may include an air-cooled heat exchanger 250 which is configured to cool anode exhaust in the first recycling conduit 222when the anode exhaust reaches the condenser 230. The heat exchanger 250 may include one or more fans to blow ambient air through the heat exchanger 250 onto the first recycling conduit 222.

The condenser 230 may be an air or water-cooled condenser configured to condense water vapor included in the fuel exhaust and output recycled fuel (e.g., mostly dewatered hydrogen). The condenser 230 may also output liquid water condensed from the fuel exhaust. Specifically, the fuel exhaust may comprise unused hydrogen and water output from the anode side of the fuel cell stack 110. Some or all of the water in the fuel exhaust is knocked out (i.e., removed) from the fuel exhaust.

The recycle blower 232 may be a blower or compressor configured to pressurize the recycled fuel (e.g., dewatered hydrogen) in the second recycling conduit 224. In some embodiments, the recycled fuel may be pressurized to approximately the same pressure as the fresh fuel provided to the fuel supply conduit 240 from a fuel source 30, such as a hydrogen (H₂) supply conduit, tank, or generator (e.g., electrolyzer, chemical reaction hydrogen generator or a hydrogen utility). For example, the recycle blower 232 may output recycled fuel at a pressure ranging from about 0.5 to 5 pounds per square inch gauge (psig), such as from about 1 to about 2 psig.

The fuel supply conduit 240 may be configured to receive fresh fuel, such as hydrogen supplied from the fuel source 30. The fuel supply conduit 240 may also receive the recycled fuel from the second recycling conduit 224. The fuel supply conduit 240 may supply the fresh fuel, the recycled fuel, or a mixture of both to the fuel supply manifold 242. The fuel supply manifold 242 may be configured to supply fuel received from the fuel supply conduit 240 to the fuel inlets 102 of each power module 10.

The power system 200 may also include one or more gas meters (e.g., flow meters and/or gas composition sensors) 260, pressure sensors 262, flow control valves 264, gas flow regulators 266, and/or non-return valves 270, to control fluid flow to and from the power modules 10. In particular, the power system 200 may include a first gas meter 260A configured to measure gas flow from the hydrogen source 30, and a first pressure sensor 262A configured to detect gas pressure in the fuel supply conduit 240. The power system 200 may also include a second gas meter 260B configured to measure gas flow in the second recycling conduit 224, and a second pressure sensor 262B configured to detect gas pressure in the second recycling conduit 224. In one embodiment, the power system 200 may be operated based on pressure control rather than mass flow control. In this embodiment, expensive and complex mass flow control valves and mass flow controllers (MFCs) that are used in some prior art systems may be omitted to simplify the power system 200.

In various embodiments, the power system 200 may include a flow control valve 264 and/or a gas flow regulator (e.g., pressure regulator) 266 disposed on the trunk conduit 242T (e.g., located in the fuel processing module 14) and configured to control gas flow through the trunk conduit 242T. The power system 200 may include a gas flow regulator 266 and/or flow control valves 264 to control gas flow from the fuel inlet 102 through the fuel inlet conduit 112 and the first and/or the second heater conduits 152A and/or 152B.

The power system 200 may include flow control valves 264 disposed on the first and second heater conduits 252A, 252B, to control (e.g., to turn on and off) the gas flow to heating fuel inlet 154A and the ignition fuel inlet 154B of each corresponding power module 10. The power system 200 may include pressure sensors 262 configured to detect gas pressure in the fuel inlet conduit 112 and the first heater conduit 152A.

In some embodiments, the power system 200 may include a purge valve 268 disposed on each first heater conduit 152A, and a purge valve 268 disposed on each fuel exhaust conduit 114B. The purge valves 268 may be configured to relieve overpressure in the fuel supply manifold 242 and the recycling manifold 220. For example, the purge valves 268 may be configured to open during overpressure events, in order to prevent damage to system components, such as fuel cells. In various embodiments, the power system 200 may include a non-return valve 270 disposed on each fuel exhaust conduit 114B and configured to prevent backflow of fuel exhaust to the respective power modules 10.

During the start-up mode, the power system 200 may be configured to provide a relatively small amount of fuel (e.g., fresh hydrogen) to the heater 150 through the ignition fuel inlet 154B, to facilitate heater ignition. For example, the power system 200 may be configured to open the flow control valve 264 on the second heater conduit 152B and close the flow control valve 264 on the first heater conduit 152A.

Once the heater 150 is ignited, and the stack temperature is above the temperature where any water in the hydrogen fuel might condense (e.g. 50-70 °C), the power system 200 may be configured to provide a larger amount of fuel to the startup heater 150 through the first heater conduit 152A, or through the first and second heater conduits 152A, 152B, to increase the heat output of the startup heater 150. For example, the power system 200 may be configured to open the flow control valve 264 on the second heater conduit 151B, or the flow control valves 264 on both the first and second heater conduits 152A, 152B. During system startup, the flow control valves 264 on the fuel exhaust conduit 114B and/or the fuel inlet conduit 112 may be closed, such that fuel is not provided to the stacks 110 or the condenser 230.

The power system 200 may include a purge conduit 244 that fluidly connects the first heater conduit 152A to the fuel exhaust conduit 114B of each power module 10. During the start-up mode, the power system 200 may be configured to provide hydrogen to each power module 10 to purge air (e.g., oxygen) from the fuel cell stacks 110 by opening the valves 264 on the fuel inlet conduits 112. Hydrogen and any air (e.g., oxygen) purged from the power module 10 may be provided to the heater 150 via the purge conduit 244 and the first heater conduit 152A, and may be used by the heater 150 to oxidize the fuel and increase the temperature of the power module 10. In this embodiment, the purge valve 264P on the purge conduit 244 is opened during this stage of the start-up mode to provide the hydrogen and oxygen purged from the fuel cell stacks 110 to the heater 150. After the start-up mode, the purge valve 264P may be closed to block fluid flow through the purge conduit 244.

Once the power system 200 has been heated to a sufficient temperature, the power system 200 may begin steady-state operation. During steady-state mode operation, the flow control valve 264 on the fuel inlet conduit 112 remains open, such that fuel (e.g., a mixture of fresh hydrogen fuel and recycled hydrogen fuel) is provided to the stack 110 from the fuel inlet 102. In addition, the flow control valves 264 on the first and second heater conduits 152A, 152B may be closed, such that fuel is not provided to the heater 150.

However, if the measured power system 200 (e.g., fuel cell stack 110) temperature drops below a threshold temperature (e.g., due to decreased power drawn from the power system 200), then the flow control valve 264 on the first heater conduit 152A may be opened, such that fuel is provided to the heater 150 through the heating fuel inlet 154A during the steady-state mode operation. The fuel in the heater 150 is oxidized by the air exhaust output from stacks 110 (which flows through the heater 150 during the steady-state mode) to generate heat that heats the fuel cell stacks 110 to a desired temperature.

Accordingly, the heater 150 may be supplied with fresh hydrogen fuel during the start-up mode, and the stacks 110 may be provided with a mixture of fresh and recycled hydrogen during steady-state mode operation.

In various embodiments, the power system 200 may further comprise the above-described system controller 225 configured to control various elements of the power system 200. The controller 225 may include a central processing unit configured to execute stored instructions. For example, the controller 225 may be configured to control the flow control valves 264, gas flow regulators 266, and/or the recycle blower 232, in order to control the flow of fuel through the power system 200.

In some embodiments, the condenser 230, recycle blower 232, and any corresponding gas meters 260, gas flow regulators 266, and/or pressure sensors 262 may be arranged in a recycling module 16 and disposed in a separate cabinet, enclosure, room or structure from the cabinets 210. In other embodiments, the recycling module 16 may be disposed as a separate module in a separate cabinet from the above described cabinets 210, or the recycling module 16 may be included in place of or within the fuel processing module 14. In various embodiments, the multiple cabinets 210 containing the power modules 10 may be fluidly connected to the same recycling module 16.

In various embodiments, anode exhaust coolers, mass flow controllers to control fuel flow, and/or fuel exhaust blowers to control fuel exhaust flow, may be omitted from the power modules 10. The fuel processing modules 14 may also be omitted from the power modules, in some embodiments. Accordingly, overall system costs may be reduced by utilizing one condenser 230 and one recycle blower 232 to process the fuel exhaust from the power modules 10.

The utilization of the condenser 230 and the recycle blower 232 may increase system efficiency and provide fuel utilization rates of about 100%. For example, during steady-state mode operation, nearly 100% of the hydrogen in the fuel exhaust may be recycled, and no hydrogen is consumed by the startup heater 150, since fuel flow to the startup heater 150 is cut off after system start-up mode operation during which fuel flow is provided to the start-up heater through the ignition fuel inlet 154B. In case the temperature of the fuel cell stacks 110 is determined to be lower than a desired threshold, then fuel may be temporarily provided to the heater 150 through the heating fuel inlet 154A during the steady-state mode operation. The fuel in the heater 150 is oxidized by the stack air exhaust to generate heat which heats the fuel cell stacks 110 to a desired temperature.

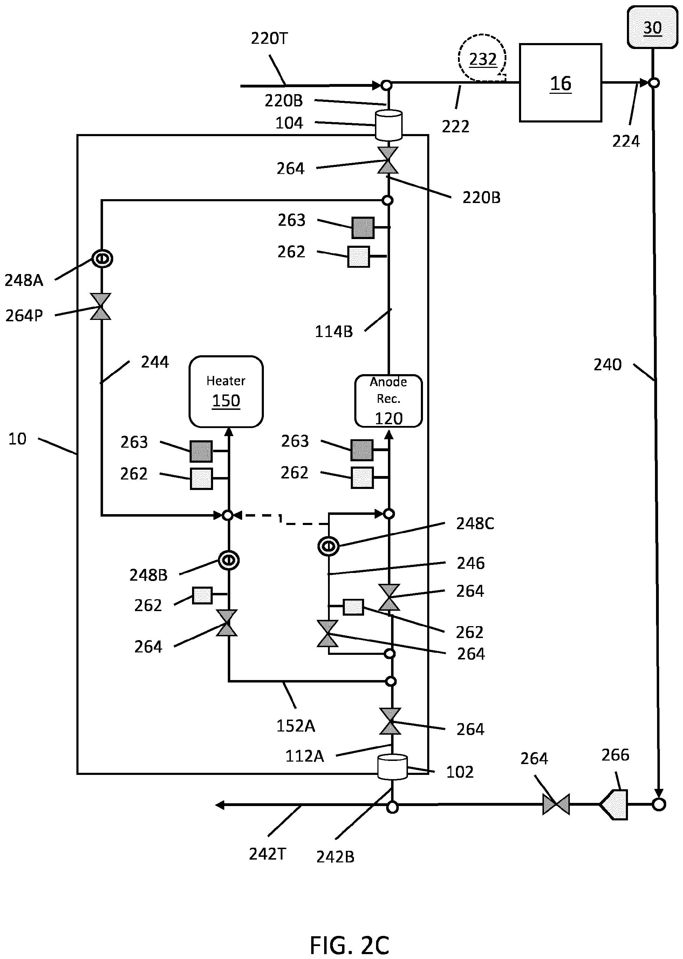

FIG. 2C is a schematic view showing fuel and exhaust elements that may alternatively be connected to a power module 10 of FIG. 2A and that are configured for pressure control, according to various embodiments of the present disclosure. FIG. 2C may include elements similar to FIG. 2B. As such, only the differences between FIGS. 2B and 2C will be discussed in detail.

Referring to FIGS. 2A and 2C, the recycling module 16 may be connected to the fuel supply conduit 240 by the second recycling conduit 224. The fuel supply conduit 240 may be connected to the power module 10 by the fuel supply manifold 242. The fuel supply manifold 242 may include a trunk conduit 242T and branch conduits 242B that are fluidly connected to the fuel inlets 102 of the power modules 10. Each fuel inlet 102 may be directly or indirectly fluidly connected to a fuel inlet conduit 112, a first heater conduit 152A and a bypass conduit 246.

The purge conduit 244 may fluidly connect the fuel exhaust conduit 114B to the first heater conduit 152A. The branch conduit 242B may fluidly connect the trunk conduit 242T to the fuel inlet 102. The first heater conduit 152A may fluidly connect the fuel inlet 102 to the startup heater 150. The bypass conduit 246may be fluidly connected in parallel to the fuel inlet conduit 112. However, in other embodiments, the bypass conduit 246 may fluidly connect the fuel inlet conduit 112 to the first heater conduit 152A, as shown by the dashed line in FIG. 2C.

Pressure sensors 262, temperature sensors 263, and/or flow control valves 264, may be disposed on various conduits to detect temperature and pressure, and to control fuel and/or anode exhaust flow. For example, a pressure sensor 262 and a temperature sensor 263 may be disposed on the branch conduit 220B to determine the pressure and temperature of anode exhaust output from the fuel exhaust outlet 104. Pressure sensors 262 and temperature sensors 263 may be disposed on the fuel inlet conduit 112 and the first heater conduit 252A to detect the pressure and temperature of fuel provided to the fuel inlet 102 and the heater 150.

The flow control valves 264 may be normally open valves configured to selectively block fluid flow. For example, a flow control valve 264 may be disposed on the branch conduit 220B to control the anode exhaust flow through the branch conduit 220B. A flow control valve 264P may be disposed on the purge conduit 244 to selectively prevent anode exhaust from flowing from the fuel inlet conduit 112 to the first heater conduit 152A after the initial oxygen / air purge of the fuel cell stack 110. Two flow control valves 264 may be disposed on the fuel inlet conduit 112, to selectively prevent fuel from flowing into the fuel inlet conduit 112 from the fuel inlet 102 and from flowing through the fuel inlet conduit 112, without passing through the bypass conduit 246. A flow control valve 264 may be disposed on the first heater conduit 152A, to selectively prevent fuel from flowing into the first heater conduit 152A from the fuel inlet 102 (e.g., from the fuel inlet through the fuel inlet conduit 112). A flow control valve 264 may be disposed on the bypass conduit 246 to selectively prevent fuel from flowing therethrough.

Flow control orifices 248 may be disposed on the first heater conduit 152A, the bypass conduit 146, and/or purge conduit 244 to control fuel mass flow therethrough. For example, first, second, and third flow control orifices 248A, 248B, 248C may be respectively disposed on the purge conduit 244, the first heater conduit 152A, and the bypass conduit 246. The flow control orifices 248A, 248B, 248C may be configured to restrict fluid flow, in order to control fuel mass flow rates through the corresponding conduits 152A, 244, 246. For example, the first flow control orifice 248A may be configured to provide a first mass flow rate through the purge conduit 244. The second flow control orifice 248 may be configured to provide a second mass flow rate through the first heater conduit 152A. The third flow control orifice 248C may be configured to provide a third mass flow through the bypass conduit 246.

In various embodiments, the first, second, and third mass flow rates provided by the flow control orifices 248A, 248B, 248C may be the same or different. In other words, the flow control orifices 248A, 248B, 248C may provide the same or different amounts of flow restriction for fluids passing therethrough. For example, in some embodiments, one of the first and second flow control orifices 248A, 248B may provide a relatively low mass flow rate suitable for igniting the heater 150, and the other of the first and second flow control orifices 248A, 248B may provide a relatively high mass flow rate suitable for startup heating.

For example, during the start-up mode, fuel may initially be provided to the heater 150 through the first heater conduit 152A, at a first mass flow rate that is at least partially determined by the second flow control orifice 248B, to ignite the heater 150. Then fuel may be provided to the heater 150 through the purge conduit 244, at a flow rate that is at least partially determined by the first flow control orifice 248A, in order to generate heat using the purged air and fresh purge fuel. In the alternative, fuel may be provided through both conduits 244 and 152A, during module 10 heating.

During steady-state mode operation, fuel may be provided to the anode recuperator 120, either directly through the fuel inlet conduit 112, or after having been diverted through the bypass conduit 246. Fuel may be provided through the fuel inlet conduit 112 at a higher mass flow rate than through the bypass conduit 246, due to flow restriction imparted by the third flow control orifice 248C. In some embodiments, the fuel may be provided to the stacks 110 through the bypass conduit 246 at a reduced mass flow rate provided by the third flow control orifice 248C during low electrical load steady-state operation, during shut down operation, and/or during stack seal conditioning (i.e., when the glass or glass ceramic seal precursor in the stacks 110 are reflowed at high temperature to form the stack 110 seals). In particular, the lower mass flow rate may reduce stack fuel leaks during stack seal conditioning.

Accordingly, different fuel mass flow rates may be provided to the power module 10 without using mass flow control or proportional valves or mass flow controllers. In particular, the present inventors have determined that mass flow control elements, such as proportional valves and conventional mass flow controllers significantly increase production costs and reduce product reliability. As such, production costs may be reduced and system reliability may be increased, by using flow control orifices and pressure based system control as shown in FIG. 2C. In other words, the fuel flow to the power system 200 may be controlled using one or more pressure regulators without using mass flow controllers based on readings from pressure and temperature sensors and by knocking out water from the anode exhaust.

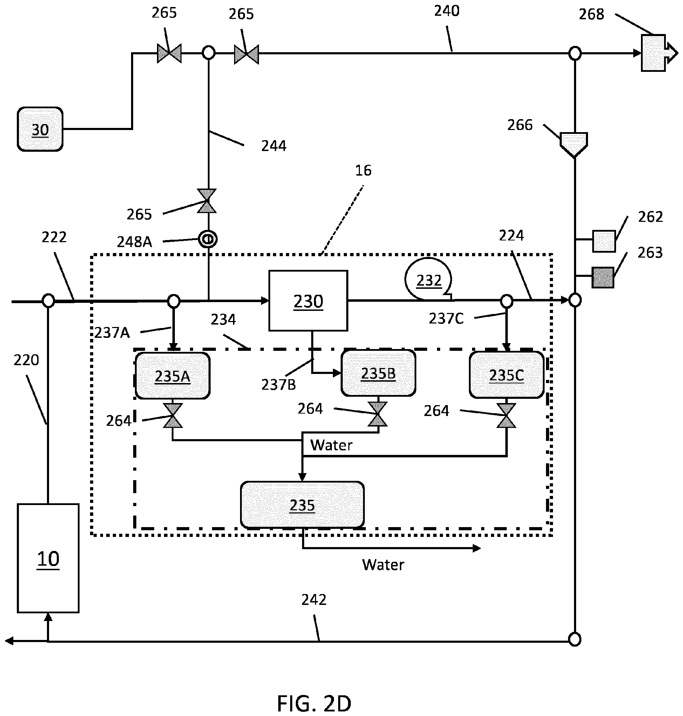

FIG. 2D is a schematic view showing fuel supply and recycling module components that may alternatively be connected to a power module 10 of FIG. 2A and that are configured for pressure control, according to various embodiments of the present disclosure. FIG. 2D may include similar elements as shown in FIGS. 2A-2C, as such only the differences between FIG. 2D and FIGS. 2A-2C will be discussed in detail.

Referring to FIGS. 2A and 2D, the water drain conduit 234 of the recycling module 16 may include a primary container 235 (e.g., water tank) to collect water condensed in the condenser 230 from anode exhaust output from the power module 10. For example, the primary container 235 may be fluidly connected to the first recycling conduit 222, the condenser 230 and/or the second recycling conduit 224 upstream, at and/or downstream of the condenser 230, by water conduits 237A, 237B, and/or 237C. In some embodiments, secondary containers 235A, 235B, and/or 235C (e.g., water tanks) may be fluidly connected to the water conduits 237A, 237B, and/or conduit 237C. For example, the secondary container 235A may collect water condensed in the first recycling conduit 222, the secondary container 235B may collect water output from the condenser 230, and/or the secondary container 235C may collect water downstream of the recycle blower 232. In some embodiments, flow control valves 264, such as normally closed valves, may be disposed downstream of the secondary containers 235A, 235B, 235C, to control water flow to the primary container 235.

In some embodiments, the purge conduit 244 may fluidly connect the fuel supply conduit 240 to the first recycling conduit 222. Gas safety valves 265 may be disposed on the fuel supply conduit 240 and/or the purge conduit 244. A pressure sensor 262, a temperature sensor 263 and a gas flow regulator 266 may also be disposed on the fuel supply conduit 240 gas flow regulator 266 may also be disposed on the fuel supply conduit 240, and the first flow control orifice 248A may be disposed on the purge conduit 244.

During startup operation, such as when the power module 10 is at ambient temperature, fuel (e.g., hydrogen) may be provided to the power module 10 via the purge conduit 244. The mass flow rate of the fuel may be at least partially controlled by the flow control orifice 248A.

Thus, in one embodiment shown in FIG. 2D, the purge conduit 244 fluidly connects the fuel supply conduit 240 to the recycling manifold 222 or to the recycling manifold 220 (which fluidly connects the recycling manifold 222 to the condenser 230). During the start-up mode, the system controller 225 is configured to control the flow control valves, such that the stack 110 is purged of air by the recycle blower 232 providing the fresh fuel to the stack 110 from the fuel source 30 through the fuel supply conduit 240, the fuel supply manifold 242, and the fuel inlet 102. Therefore, during the start-up mode, the stack 110 is purged of air by providing the fresh hydrogen fuel to the stack 110 through a purge conduit 244 which fluidly connects a hydrogen fuel source 30 to the condenser 230 and the recycle blower 232, and the recycle blower 232 provides the fresh hydrogen fuel through the fuel inlet 102 into the stack 110.

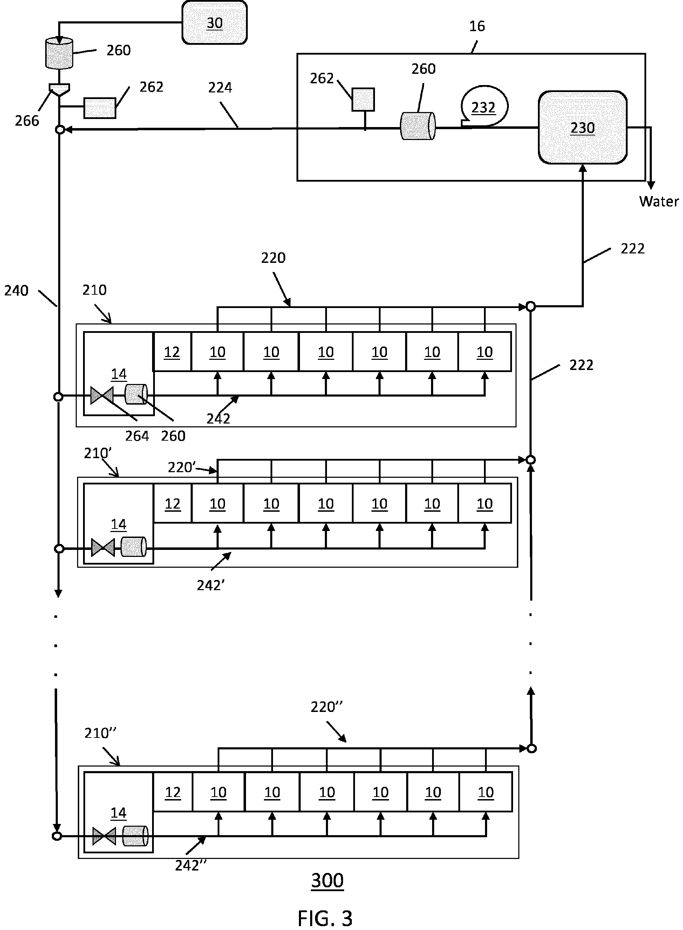

FIG. 3 is a simplified schematic view of a power system 300, according to various embodiments of the present disclosure. The power system 300 may be similar to the power system 200. As such, only the differences therebetween will be discussed in detail.

Referring to FIG. 3, the power system 300 may include multiple rows of cabinets 210, 210', 210" fluidly connected to the same condenser 230, and optionally to the same recycle blower 232. In particular, the power system 300 may include multiple fuel supply manifolds 242, 242', 242" configured to provide hydrogen from the fuel supply conduit 240 to the power modules 10 of the corresponding rows of cabinets 210, 210', 210". The power system 300 may also include multiple recycling manifolds 220, 220', 220" configured to provide fuel exhaust to the first recycling conduit 222 from the corresponding rows of cabinets 210, 210', 210".

While three rows of cabinets are shown in FIG. 3, the present disclosure is not limited to any particular number of rows of cabinets. For example, the power system 300 may include from 2 to 20 rows of cabinets. In addition, the present disclosure is not limited to any particular number of power modules 10 that may be included in a row of cabinets. For example, the row of cabinets may include from 2 to 30 power modules.

In some embodiments, the condenser 230, recycle blower 232, and any corresponding gas meters 260 and/or pressure sensors 262 may be arranged as a recycling module 16 and disposed in a separate enclosure or location from the rows of cabinets 210, 210', 210". Thus, a single condenser 230 and optionally a single anode recycle blower 232 is used for plural rows of cabinets. This reduces the system cost and complexity.

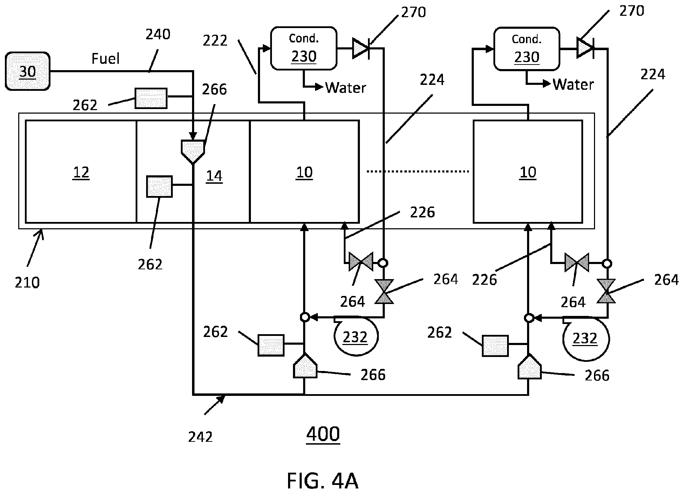

FIG. 4A is a simplified schematic view of a power system 400, according to various embodiments of the present disclosure. The power system 400 may be similar to the power system 200. As such, only the differences therebetween will be discussed in detail. Specifically, in this embodiment, each power module 10 has a dedicated condenser 230. Thus, there are the same numbers of power modules and condensers in this embodiment.

Referring to FIGS. 1 and 4A, the power system 400 may include at least one cabinet 210 including power modules 10, a power conditioning module 12, a fuel processing module 14, condensers 230, and recycle blowers 232. The fuel processing module 14 may be fluidly connected to a fuel source, such as a hydrogen source 30, by a fuel supply conduit 240. The fuel processing module 14 may include various fuel control elements, such as a pressure sensor 262, a gas flow regulator 266, a gas meter, or the like. The fuel processing module 14 may be fluidly connected to a fuel supply manifold 242 configured to provide fuel output from the fuel processing module 14 to inlets of the power modules 10, such the fuel inlets 102.

The power system 400 may include one condenser 230 for each power module 10. However, in other embodiments, one condenser 230 may be shared between two or more power modules 10. The condensers 230 may be configured to remove water from the fuel exhaust of a corresponding power module 10. In particular, first recycling conduits 222 may be configured to provide fuel exhaust output from the power modules 10 to an inlet of each condenser 230. The condensers 230 may be configured to output condensed water and substantially pure recycled fuel, such as dewatered hydrogen.

Second recycling conduits 224 may be configured to fluidly connect fuel outlets of condensers 230 to the fuel supply manifold 242, such that fuel exhaust generated by each power module 10 is returned to the same power module 10, after water removal in the corresponding condensers 230. Separate recycle blowers 232 may be configured to pressurize the recycled fuel in each of the second recycling conduits. There may be one recycle blower 232 for each condenser 230.

Third recycling conduits 226 may be configured to fluidly connect corresponding second recycling conduits 224 to at least one inlet of a corresponding power modules 10. For example, the third recycling conduits 226 may be configured to provide fuel from the second recycling conduits 224 to one or both of the ignition fuel inlet 154B and the heating fuel inlet 154A of each power module 10.

The power system 400 may include additional fuel control and/or detection elements, such as pressure sensors 262, flow control valves 264, gas flow regulators 266, gas meters, or the like, in order to control fuel flow during startup and steady-state operations, as described above and shown in FIG. 4A. For example, the power system may be configured to utilize the flow control valves 264 to supply hydrogen to the heater 150, only during start-up mode or lower power steady-state mode operation were additional heating is required to maintain desired fuel cell stack operating temperatures.

In some embodiments, the power modules 10 may include anode exhaust coolers 140, in order to reduce the temperature of the fuel exhaust output to the condensers 230. However, in other embodiments, the anode exhaust coolers 140 may be omitted. In some embodiments, the power system 400 may include purge valves configured to relieve overpressure in the fuel supply manifold 242 and/or the recycling conduits 222, 224, as discussed above with respect to FIG. 2A.

Accordingly, the power system 400 may be configured to recycle the fuel exhaust of each power module using a corresponding condenser 230 and recycle blower 232. As such, the power system may have a fuel utilization rate of 99% or more. In addition, since hydrogen does not need to be provided to a startup heater or an anode tail gas oxidizer during steady-state operation, the power system 400 may provide increased system efficiency.

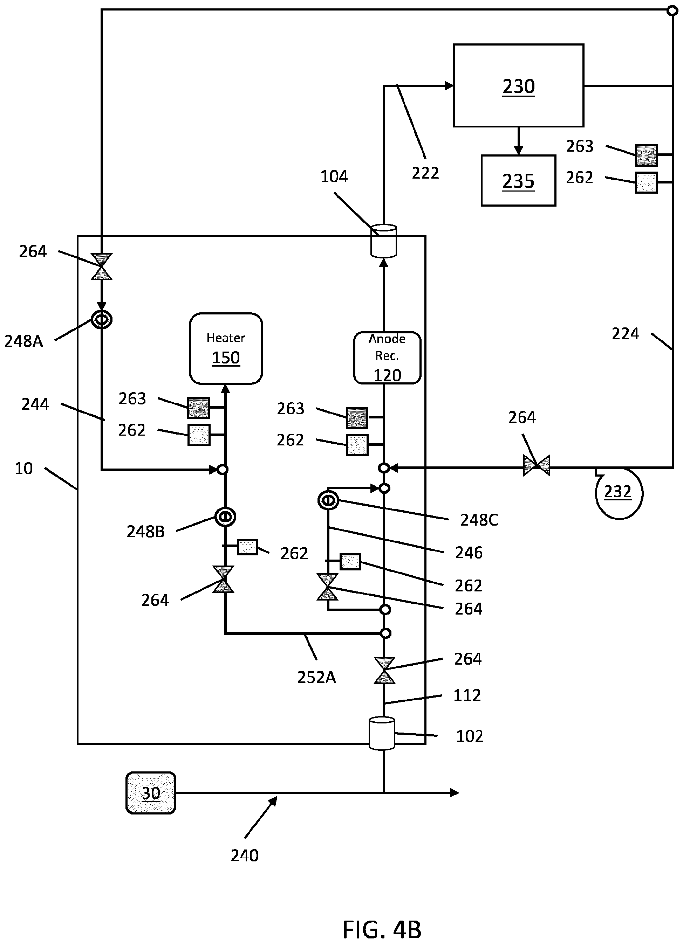

FIG. 4B is a schematic view showing alternative fuel supply and recycling elements configured to for pressure control operation and that may be used in the system of FIG. 4A according to various embodiments of the present disclosure. FIG. 4B includes elements similar to the elements of FIGS. 2C and 4A. As such, only the differences between FIGS. 2C and 4B will be discussed in detail.

Referring to FIGS. 1 and 4B, a purge conduit 244 may fluidly connect the fuel inlet conduit 112 to the first heater conduit 152A. The second recycling conduit 224 may fluidly connect the condenser 230 to the fuel inlet conduit 112. A primary container 235 may be configured to receive water condensed from the anode exhaust by the condenser 230. First, second, and third flow control orifices 248A, 248B, 248C may be used to control mass flow rates through the purge conduit 244, the first heater conduit 252A, and the bypass conduit 246.

Thus, in some embodiments a SOFC power system which operates on hydrogen fuel may be operated using pressure control instead of a mass flow controller (MFC) by knocking out the product water from the anode exhaust. The hydrogen fuel flow may be set using a pressure regulator 266 at the site level that contains plural rows of cabinets 210 as shown in FIG. 3, at the row of cabinets 210 level, as shown in FIG. 2A, and/or at power module 10 level, as shown in FIG. 4A. The gas flow regulator 266 may be set to meet the maximum hydrogen flow required per cabinet 210 or power module 10 from the cold start of the power system 200, 300 or 400.

In one embodiment, the fuel purge step during the start-up mode is conducted as follows. The purge fuel is routed to the heater 150, such that oxidized fuel will be exhausted out of the hot box 100 via outlet 132. If all of the power modules 10 are at cold start (for a given site), then purge may be carried out through the orifice 248A located on the purge conduit 244, as shown in FIGS. 2C, 2D and 4B. However, if some of the power modules 10 are operating while another power module 10 is replaced with a new power module (e.g., a field replacement step), then the purge may be carried out through orifice 248B located on the first heater conduit 152A, as shown in FIGS. 2C and 4B.

During the cold start, the hydrogen fuel flow is provided to the heater 150 to heat up the power system. The heater 150 may contain two separate fuel inlets 154A and 154B fluidly connected to the respective heater conduits 152A and/or 152B. The ignition fuel inlet 154B may be used during the heater 150 ignition (i.e., light off), while the heating fuel inlet 154A (or both fuel inlets 154A and 154B) may be used to operate the heater 150 to heat the hot box 100 (e.g., during start-up mode and/or during the lower power stead-state mode). The heating fuel inlet 154A may be directly or indirectly fluidly connected to the purge conduit 244, as shown in FIG. 2B.

During the seal conditioning and/or during system shutdown, the hydrogen fuel may be provided to the fuel inlet 102 through orifice 248C and conduit 246. This helps to reduce the leaks at the stack 110 interfaces during stack conditioning (i.e., sealing).

In one embodiment, during the steady-state mode operation at full power output, no fuel is provided to the heater 150, since hydrogen fuel operation of the stack 110 typically does not require external heating except in low output power mode. Instead, only the cathode exhaust from the stack 110 flows through the heater 150. By not providing fuel to the heater 150 during steady-state mode operation, the power system may operate at close to 100% fuel utilization. While the stack 110 generates electrical power, the stack 110 produces water as a by-product on the anode side of each fuel cell along with unused hydrogen fuel (i.e., the anode exhaust).

Under all operating conditions (cold start, transient, steady-state less than full power or steady-state full power) the unused fuel and by-product water from the anode side (i.e., the anode exhaust) may be collected through a common manifold 220 from each power module 10. The combined anode exhaust from all of the power modules 10 is routed through condenser 230 in which the heat exchanger / heat pipes 250 condense the water from the anode exhaust stream and separate out the liquid water as a product. Uncondensed anode exhaust will still contain 1-10 % by volume water and is fed to the recycle blower/compressor 232 to boost the pressure to a desired pressure, e.g., 1-2 psig. The pressurized anode exhaust stream is mixed with fresh hydrogen fuel (e.g., downstream of the pressure regulator 266 in the power system 300 in FIG. 3).

Due to the circulation of the unused fuel in the anode exhaust fuel and not providing fuel to the heater 150 during the full power steady-state mode operation, near 100% fuel utilization may be achieved, except for the very small amount of hydrogen that is soluble in the condensed water provided to the container (e.g., tank 235). Removal of water from the anode exhaust stream reduces the fuel dilution at the stack level, increases the fuel cell voltage and boosts operating efficiency. Not providing fuel to the heater 150 during full power steady-state mode leads to a reduction of the volume of air provided to the cathodes of the stack 110, which results in reducing the parasitic loads. Due to 100% fuel utilization and water removal, the net system efficiency is improved, e.g., to about 57-60 % LHV. Furthermore due to cooling of the anode exhaust stream, the heat can be captured from anode exhaust stream to increase the combined heat and power efficiency.

In one embodiment, the condensed water from the anode exhaust (e.g., from the container 235) can be used as feed to an electrolyzer to generate "green" hydrogen. The electrolyzer may correspond to the fuel source 30. The generated "green" hydrogen may be used as the fuel in the power generation systems described above.

In one embodiment, the condenser 230 may be an air cooled condenser. Alternatively, a water cooled condenser 230 which uses cooling water may be used if the site has a cooling tower.

In one embodiment, if the anode exhaust cooler 140 is not sufficient to cool the entire anode exhaust stream to the desired temperature (e.g., a temperature which is safe for the valves), then an additional air cooler may be provided on the recycling manifold 220 and/or on the first recycling conduit to further reduce the temperature.

Alternatively, the anode exhaust cooler 140 may optionally be omitted from the power system. In this embodiment, a gas solenoid valve may be provided on the fuel supply conduit 240 or manifold 242 to isolate the power module(s) 10 during service. The valve should be rated for operation at a temperature above 400 degrees Celsius, such as 450 to 500 degrees Celsius. The omission of the anode exhaust cooler 140 reduces the system cost and complexity.

FIG. 5 is a simplified schematic view of additional components of the power system 300 of FIG. 3, according to various embodiments of the present disclosure. In FIG. 5, only one recycling manifolds 220 is shown for clarity. The remaining recycling manifolds 220', 220" shown in FIG. 3 are present but are not shown for clarity in FIG. 5. Referring to FIGS. 1, 3, and 5, water generated by the system 300 and collected by the condenser 230 may be evaporated using cathode exhaust and discharged from the power system 300.

In particular, the power system 300 may include an exhaust manifold 206 configured to receive cathode exhaust from the power modules 10 of each module cabinet 210. For example, the power system 300 may include exhaust manifolds 206, 206', 206" configured to respectively receive cathode exhaust output from the power modules of each module cabinet 210, 210', 210". The inlets of the exhaust manifolds 206, 206', 206" may be fluidly connected to or comprise a portion of the cathode exhaust conduits 204D of the power modules 10. The outlet of the exhaust manifolds 206, 206', 206" may be fluidly connected to a system exhaust conduit 208 configured to receive the cathode exhaust generated by all of the power modules 10.

The water drain conduit 234 of the recycling module 16 may be fluidly connected to the system exhaust conduit 208. The system 300 may also include a water valve 214 and an exhaust temperature sensor 216. The exhaust temperature sensor 216 may be configured to detect the temperature of the cathode exhaust in the system exhaust conduit, upstream of the water drain conduit 234. The water valve 214 may be an on-off or proportionate valve configured to control water flow through the water drain conduit 234 to the system exhaust conduit 208. In some embodiments, a water pump 218 is configured to pump water through the water drain conduit 234. In some embodiments, an optional exhaust oxidizer 219 may be added to the system exhaust conduit 208. The exhaust oxidizer 219 may comprise a tube or conduit containing a catalyst (e.g., noble metal catalyst) which promotes oxidation of residual hydrogen provided from the heater 150 through the cathode recuperator 130 into the system exhaust conduit 208. The oxidation increases the temperature of the cathode exhaust.

The system controller 225 may be configured to control the water valve 214 and/or the water pump 218 based on the temperature detected by the exhaust temperature sensor 216, to ensure that the water provided to the system exhaust conduit 208 is evaporated and discharged with the cathode exhaust. For example, during system startup, the system controller 225 may restrict the flow of water into the system exhaust conduit 208. As the temperature of the cathode exhaust increases, the system controller 225 may be configured to increase the amount of water provided to the system exhaust conduit. In the alternative, the system controller 225 may be configured to open the water valve 214, if the cathode exhaust temperature equals or exceeds a set temperature. The water from the condenser 230 is vaporized into water vapor in the system exhaust conduit 208.

In an alternative embodiment, water collected in the recycling module 16 may be output from the system as a liquid. For example, the water drain conduit 234 may be connected to a sewer or storage pond. In some embodiments, the water may be treated, if necessary, and used for irrigation, as potable water, and/or provided to an electrolyzer for hydrogen generation (e.g., to generate hydrogen by electrolyzing the water). In one embodiment, the water may be pre-treated (e.g., purified or filtered) upstream of the electrolyzer prior to being provided to the electrolyzer.

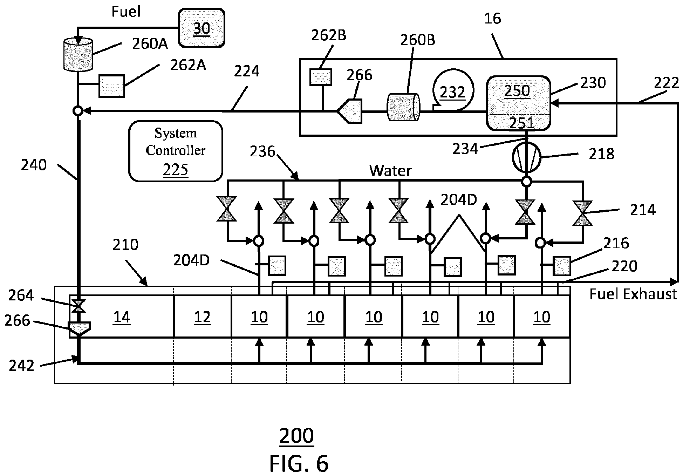

FIG. 6 is a simplified schematic view of additional components of the power system 200 of FIG. 2A, according to various embodiments of the present disclosure. Referring to FIGS. 1, 2A, and 6, water generated by the system 200 and collected by the condenser 230 may be evaporated using cathode exhaust and discharged from the power system 200.

In particular, the power system 200 may include a water manifold or conduit 236, water valves 214 and exhaust temperature sensors 216. The water manifold 236 may be configured to fluidly connect the water drain conduit 234 to the cathode exhaust conduits 204D of the power modules 10. The exhaust temperature sensors 216 may be configured to measure the cathode exhaust temperature in respective cathode exhaust conduits 204D. The water valves 214 may be proportionate or solenoid valves configured to control water flow through the water manifold 236 to respective ones of the cathode exhaust conduits 204D. The power system 200 may also include the water pump 218 configured to pump water through the water manifold 236.

In particular, the system controller 225 may be configured to control the water valves 214 based on the detected cathode exhaust temperature in each exhaust conduit 204D, such that the water provided to each cathode exhaust conduit 204D is evaporated by the cathode exhaust. For example, the controller 225 may be configured to stop or reduce water flow to cathode exhaust conduits 204D that do not have a cathode exhaust temperature and/or flow rate sufficient to evaporate water provided thereto. In some embodiments, the system controller 225 may be configured to operate the heater 150, to increase the cathode exhaust temperature and/or flow rate from one or more of the power modules 10, in order to fully evaporate the water provided to the respective cathode exhaust.

FIGS. 6 and 5 show non-limiting embodiments of configurations of how the cathode exhaust is aggregated from multiple power modules and/or multiple systems, respectively. FIG. 6 also shows a non-limiting embodiment of how the water from the condenser is divided into multiple streams and distributed into the cathode exhaust from different power modules. These figures are not intended to be limiting. In general, all of the water condensed on site can be evaporated in all of the cathode exhaust generated on site, whether the cathode exhaust is aggregated across multiple systems or multiple power modules or not aggregated at all. Similarly, the water can be collected from a condenser that serves a single power module, or from a condenser that serves multiple power modules, or from a condenser that serves an entire system, or from a condenser that serves multiple systems, or a condenser that serves the entire site.

Fuel cell systems of the embodiments of the present disclosure are designed to reduce greenhouse gas emissions and have a positive impact on the climate.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.

**The invention also refers to the following embodiments, wherein the term "claim" means "embodiment".**
1. A power system, comprising:
   power modules that each comprise a heater and a stack of fuel cells that generate a fuel exhaust;
   a condenser configured to remove water from the fuel exhaust to generate recycled fuel;
   a recycling manifold configured to receive the fuel exhaust from the power modules and to transfer the fuel exhaust to the condenser;
   a recycle blower configured to pressurize the recycled fuel output from the condenser; and
   a fuel supply manifold configured to provide fresh fuel, or a mixture of the fresh fuel and the recycled fuel, to the power modules.
2. The power system of claim 1, further comprising a pressure regulator configured to control a pressure of the fresh fuel or a pressure of the mixture of the fresh fuel and the recycled fuel provided to the power modules, wherein the system lacks a mass flow controller or a mass flow control valve.
3. The power system of claim 1, further comprising at least one cabinet housing the power modules, wherein the condenser is disposed outside of the at least one cabinet housing the power modules.
4. The power system of claim 1, further comprising:
   separate rows of cabinets that each house a number of the power modules; and
   a recycling module enclosure disposed outside of the rows of cabinets and housing the condenser and the recycle blower, wherein the recycling manifold fluidly connects the power modules of each row of cabinets to the recycling module.
5. The power system of claim 1, further comprising a hydrogen fuel supply that is fluidly connected to the fuel supply manifold by a fuel supply conduit, wherein the fresh fuel comprises hydrogen (H₂) received from the fuel supply and the recycled fuel comprises dewatered hydrogen.
6. The power system of claim 5, wherein:
   the stack comprises a solid oxide fuel cell stack; and
   the recycle blower is configured to pressurize the recycled fuel to a pressure ranging from about 1 pounds per square inch gauge (psig) to about 2 psig and to provide the pressurized recycled fuel to the fuel supply manifold.
7. The power system of claim 5, wherein the power system further comprises:
   flow control valves disposed on the fuel supply manifold and the recycling manifold; and
   a system controller configured to control the flow control valves based on an operating mode of the power system, wherein:
      during a start-up mode, the system controller is configured to control the flow control valves, such that the fuel supply manifold supplies the fresh fuel to the heaters; and
      during a full power steady-state mode, the system controller is configured to control the flow control valves, such that the fuel supply manifold supplies the mixture of the fresh fuel and the recycled fuel to the stacks and that no fuel is supplied to the heaters.
8. The power system of claim 7, wherein the heaters each comprise a heating fuel inlet and an ignition fuel inlet fluidly connected to the fuel supply manifold.
9. The power system of claim 8, further comprising a purge conduit which fluidly connects the fuel supply conduit to the recycling manifold or to a recycling conduit which fluidly connects the recycling manifold to the condenser,
   wherein during the start-up mode, the system controller is configured to control the flow control valves, such that the stack is purged of air by the recycle blower providing the fresh fuel to the stack through the recycle conduit and the main fuel inlet.
10. The power system of claim 8, further comprising a first flow control orifice located between the fuel supply manifold and the ignition fuel inlet, wherein:
   the flow control orifice is configured to provide a lower flow rate of the fresh fuel to the ignition fuel inlet than is provided to the heating fuel inlet;
   during the start-up mode, the system controller is configured to control the flow control valves, such that the fuel supply manifold initially supplies the fresh fuel to the heaters through the ignition fuel inlet to ignite a fuel and air mixture in the heaters, and then supplies the fresh fuel to the heaters through the heating fuel inlet to heat the power system;
   during a low power steady-state mode, the system controller is configured to control the flow control valves, such that the fuel supply manifold supplies the fresh fuel or the mixture of the fresh fuel and the recycled fuel to the stacks through a main fuel inlet and to the heaters through the heating fuel inlet to heat the power system; and
   during a shutdown mode or during the stack seal reflow, the system controller is configured to control the flow control valves, such that the fuel supply manifold supplies the fresh fuel or the mixture of the fresh fuel and the recycled fuel to the stacks through a second flow control orifice and through the main fuel inlet at a lower rate than during the full power steady-state mode.
11. A method of operating a fuel cell power system, comprising:
   providing a fresh hydrogen fuel to power modules that each comprise a heater and a stack of fuel cells;
   providing a fuel exhaust comprising hydrogen and water from the stack to a condenser;
   removing water from the fuel exhaust to generate a recycled fuel comprising dewatered hydrogen; and
   pressurizing and recycling the recycled fuel output from the condenser to the power modules.
12. The method of claim 11, wherein the fresh hydrogen fuel and the recycled fuel flows are controlled by at least one pressure regulator and at least one pressure sensor without using mass flow control.
13. The method of claim 11, wherein the power modules are disposed in at least one power module cabinet and the condenser is disposed in a recycling module enclosure that is separate from the at least one power module cabinet.
14. The method of claim 11, wherein:
   the power modules are located in separate power module cabinets;
   the condenser and a recycle blower that pressurizes and recycles the recycled fuel are located in the recycling module enclosure disposed outside of the power module cabinets;
   the fuel exhaust from the power modules located in the power module cabinets is provided to the condenser in the recycling module enclosure; and
   the recycle blower located in the recycling module enclosure recycles the recycled fuel to the power modules located in the power module cabinets.
15. The method of claim 14, wherein:
   the stack comprises a solid oxide fuel cell stack; and
   the recycle blower pressurizes the recycled fuel to a pressure ranging from about 1 pounds per square inch gauge (psig) to about 2 psig.
16. The method of claim 11, wherein:
   during a start-up mode, the fresh hydrogen fuel is supplied directly to the heaters; and
   during a full power steady-state mode, the mixture of the fresh fuel and the recycled fuel is supplied to the stacks, and neither of the fresh hydrogen fuel or the recycled fuel is supplied to the heaters.
17. The method of claim 16, wherein during the start-up mode, the fresh hydrogen fuel is initially supplied to the heaters through an ignition fuel inlet at a first rate to ignite the fresh hydrogen fuel and air mixture in the heaters, followed by the fresh hydrogen fuel being supplied to the heaters through a heating fuel inlet at a second rate greater than the first rate to heat the fuel cell power system.
18. The method of claim 17, wherein:
   during a low power steady-state mode, the fresh fuel or the mixture of the fresh fuel and the recycled fuel is supplied to the stacks through a main fuel inlet and to the heaters through the heating fuel inlet to heat the fuel cell power system;
   during a shutdown mode or during the stack seal reflow, the fresh fuel or the mixture of the fresh fuel and the recycled fuel is supplied to the stacks through the main fuel inlet at a lower rate than during the full power steady-state mode; and
   during the start-up mode, the stack is purged of air by providing the fresh hydrogen fuel to the stack through a purge conduit which fluidly connects a hydrogen fuel source to the condenser and the recycle blower, and the recycle blower provides the fresh hydrogen fuel into the main fuel inlet.
19. The method of claim 11, further comprising:
   generating a cathode exhaust from the stack; and
   providing the removed water into the cathode exhaust to evaporate the water.
20. The system of claim 1, further comprising:
   a system exhaust conduit configured to collect cathode exhaust output from the power modules; and
   a water drain conduit fluidly connecting the condenser to the system exhaust conduit.

## Claims

1. A power system, comprising:
power modules that each comprise a heater and a stack of fuel cells that generate a fuel exhaust;
a condenser configured to remove water from the fuel exhaust to generate recycled fuel;
a recycling manifold configured to receive the fuel exhaust from the power modules and to transfer the fuel exhaust to the condenser;
a recycle blower configured to pressurize the recycled fuel output from the condenser; and
a fuel supply manifold configured to provide fresh fuel, or a mixture of the fresh fuel and the recycled fuel, to the power modules.

2. The power system of claim 1, further comprising a pressure regulator configured to control a pressure of the fresh fuel or a pressure of the mixture of the fresh fuel and the recycled fuel provided to the power modules, wherein the system lacks a mass flow controller or a mass flow control valve.

3. The power system of claim 1, further comprising at least one cabinet housing the power modules, wherein the condenser is disposed outside of the at least one cabinet housing the power modules.

4. The power system of claim 1, further comprising:
separate rows of cabinets that each house a number of the power modules; and
a recycling module enclosure disposed outside of the rows of cabinets and housing the condenser and the recycle blower, wherein the recycling manifold fluidly connects the power modules of each row of cabinets to the recycling module.

5. The power system of claim 1, further comprising a hydrogen fuel supply that is fluidly connected to the fuel supply manifold by a fuel supply conduit, wherein the fresh fuel comprises hydrogen (H₂) received from the fuel supply and the recycled fuel comprises dewatered hydrogen.

6. The power system of claim 5, wherein:
the stack comprises a solid oxide fuel cell stack; and
the recycle blower is configured to pressurize the recycled fuel to a pressure ranging from about 1 pounds per square inch gauge (psig) to about 2 psig and to provide the pressurized recycled fuel to the fuel supply manifold.

7. The power system of claim 5, wherein:
the power system further comprises:
flow control valves disposed on the fuel supply manifold and the recycling manifold; and
a system controller configured to control the flow control valves based on an operating mode of the power system, wherein:
during a start-up mode, the system controller is configured to control the flow control valves, such that the fuel supply manifold supplies the fresh fuel to the heaters; and
during a full power steady-state mode, the system controller is configured to control the flow control valves, such that the fuel supply manifold supplies the mixture of the fresh fuel and the recycled fuel to the stacks and that no fuel is supplied to the heaters; and
the heaters each comprise a heating fuel inlet and an ignition fuel inlet fluidly connected to the fuel supply manifold.

8. The power system of claim 7, further comprising:
a purge conduit which fluidly connects the fuel supply conduit to the recycling manifold or to a recycling conduit which fluidly connects the recycling manifold to the condenser, wherein during the start-up mode, the system controller is configured to control the flow control valves, such that the stack is purged of air by the recycle blower providing the fresh fuel to the stack through the recycle conduit and the main fuel inlet; and
a first flow control orifice located between the fuel supply manifold and the ignition fuel inlet, wherein:
the flow control orifice is configured to provide a lower flow rate of the fresh fuel to the ignition fuel inlet than is provided to the heating fuel inlet;
during the start-up mode, the system controller is configured to control the flow control valves, such that the fuel supply manifold initially supplies the fresh fuel to the heaters through the ignition fuel inlet to ignite a fuel and air mixture in the heaters, and then supplies the fresh fuel to the heaters through the heating fuel inlet to heat the power system;
during a low power steady-state mode, the system controller is configured to control the flow control valves, such that the fuel supply manifold supplies the fresh fuel or the mixture of the fresh fuel and the recycled fuel to the stacks through a main fuel inlet and to the heaters through the heating fuel inlet to heat the power system; and
during a shutdown mode or during the stack seal reflow, the system controller is configured to control the flow control valves, such that the fuel supply manifold supplies the fresh fuel or the mixture of the fresh fuel and the recycled fuel to the stacks through a second flow control orifice and through the main fuel inlet at a lower rate than during the full power steady-state mode.

9. The power system of claim 1, further comprising:
a system exhaust conduit configured to collect cathode exhaust output from the power modules; and
a water drain conduit fluidly connecting the condenser to the system exhaust conduit.

10. A method of operating a fuel cell power system, comprising:
providing a fresh hydrogen fuel to power modules that each comprise a heater and a stack of fuel cells;
providing a fuel exhaust comprising hydrogen and water from the stack to a condenser;
removing water from the fuel exhaust to generate a recycled fuel comprising dewatered hydrogen; and
pressurizing and recycling the recycled fuel output from the condenser to the power modules.

11. The method of claim 10, wherein the fresh hydrogen fuel and the recycled fuel flows are controlled by at least one pressure regulator and at least one pressure sensor without using mass flow control.

12. The method of claim 10, wherein the power modules are disposed in at least one power module cabinet and the condenser is disposed in a recycling module enclosure that is separate from the at least one power module cabinet.

13. The method of claim 10, wherein:
the power modules are located in separate power module cabinets;
the condenser and a recycle blower that pressurizes and recycles the recycled fuel are located in the recycling module enclosure disposed outside of the power module cabinets;
the fuel exhaust from the power modules located in the power module cabinets is provided to the condenser in the recycling module enclosure;
the recycle blower located in the recycling module enclosure recycles the recycled fuel to the power modules located in the power module cabinets;
the stack comprises a solid oxide fuel cell stack; and
the recycle blower pressurizes the recycled fuel to a pressure ranging from about 1 pounds per square inch gauge (psig) to about 2 psig.

14. The method of claim 10, wherein:
during a start-up mode, the fresh hydrogen fuel is supplied directly to the heaters; and
during a full power steady-state mode, the mixture of the fresh fuel and the recycled fuel is supplied to the stacks, and neither of the hydrogen fresh fuel or the recycled fuel is supplied to the heaters;
during the start-up mode, the fresh hydrogen fuel is initially supplied to the heaters through an ignition fuel inlet at a first rate to ignite the fresh hydrogen fuel and air mixture in the heaters, followed by the fresh hydrogen fuel being supplied to the heaters through a heating fuel inlet at a second rate greater than the first rate to heat the fuel cell power system;
during a low power steady-state mode, the fresh fuel or the mixture of the fresh fuel and the recycled fuel is supplied to the stacks through a main fuel inlet and to the heaters through the heating fuel inlet to heat the fuel cell power system;
during a shutdown mode or during the stack seal reflow, the fresh fuel or the mixture of the fresh fuel and the recycled fuel is to the stacks through the main fuel inlet at a lower rate than during the full power steady-state mode; and
during the start-up mode, the stack is purged of air by providing the fresh hydrogen fuel to the stack through a purge conduit which fluidly connects a hydrogen fuel source to the condenser and the recycle blower, and the recycle blower provides the fresh hydrogen fuel into the main fuel inlet.

15. The method of claim 10, further comprising:
generating a cathode exhaust from the stack; and
providing the removed water into the cathode exhaust to evaporate the water.
